# EUROPEAN PATENT APPLICATION

(11) **EP 4 015 418 A1**
(43) Date of publication of application: **22.06.2022**
(21) Application number: 21207071.8
(22) Date of filing: 09.11.2021
(51) Int. Cl.: B65G 13/11, B65G 21/00, B65G 21/06, F16C 13/02, B65G 39/12

(54) **ROLLER AXLE LOCK**

(30) Priority: 17.12.2020 IN 202011054942; 19.03.2021 US 202117249949
(71) Applicant: Intelligrated Headquarters LLC, Mason, OH 45040 (US)
(72) Inventor: SOUNDHARARAJ, Aravind Raj, Charlotte, 28202 (US); MANJUNATH, Niranjan, Charlotte, 28202 (US); KUDDUVA SUBRAMANI, Sathiyanarayanan, Charlotte, 28202 (US); SHIVU, Sharath, Charlotte, 28202 (US)
(74) Representative: Haseltine Lake Kempner LLP

(57) **Abstract**

A support for securing one end of a conveyor roller to a conveyor frame. The support includes a mounting plate with a first aperture, a securing plate with a second aperture, and a bushing. The first aperture is partially offset from the second aperture when the securing plate is coupled to the mounting plate. Further, in response to the bushing being inserted through the first aperture and the second aperture, the bushing imparts a lateral force to move the securing plate and the mounting plate in opposite directions to secure the one end of the conveyor roller.

## Description

### CROSS-REFERENCE TO RELATED APPLICATIONS

This application claims priority to and the benefit of foreign Indian Provisional Patent Application Serial No. 202011054942, filed on December 17, 2020 with the Government of India Patent Office and entitled "Roller Axle Lock," which is incorporated herein by reference in its entirety.

### TECHNOLOGICAL FIELD

Example embodiments of the present invention relates generally to a material handling system for handling items, and, more particularly, to axle locks for use with conveyor systems.

### BACKGROUND

Material handling systems are traditionally used to convey, sort, and organize items (e.g., cartons, cases, etc.) at high speeds. Depending on the configuration of the system, the items may travel through the system in an unregulated manner or may be consolidated into a single stream of items. Conveyor systems may rely on a conveyor controller and/or warehouse management system to organize items through all stages of handling and processing.

Conventional conveyor systems may also include a conveyor bed and multiple conveyor carriers in the form of conveyor rollers or belts supported on a conveyor frame of the conveyor bed. The multiple conveyor carriers are often used for supporting and transporting items within the material handling system. An example conveyor system may include a sorter conveyor system, a merge conveyor system, an accumulation conveyor system, an induction conveyor system, or the like. These conveyor systems are often divided into conveyor zones with each conveyor zone including a set of motorized and/or idler rollers that each include an axle coupled to the conveyor frame.

### SUMMARY

The following presents a simplified summary to provide a basic understanding of some aspects of the disclosed material handling system. This summary is not an extensive overview and is intended to neither identify key or critical elements nor delineate the scope of such elements. Its purpose is to present some concepts of the described features in a simplified form as a prelude to the more detailed description that is presented later.

Various example embodiments described herein, relates to a support for securing one end of a conveyor roller to a conveyor frame. The support includes a mounting plate with a first aperture, a securing plate with a second aperture, and a bushing. The first aperture is partially offset from the second aperture when the securing plate is coupled to the mounting plate. In response to the bushing being inserted through the first aperture and the second aperture, the bushing imparts a lateral force to move the securing plate and the mounting plate in opposite directions to secure the one end of the conveyor roller.

Various example embodiments described herein, relates to a support for securing one end of a conveyor roller to a conveyor frame, wherein the securing plate slides laterally towards the one end of the conveyor roller to lock the one end of the conveyor roller against one end of the mounting plate

Various example embodiments described herein, relates to a support for securing one end of a conveyor roller to a conveyor frame, wherein the securing plate slides in a first direction and the mounting plate slides in a second direction opposite to the first direction to secure the one end of the conveyor.

Various example embodiments described herein, relates to a support for securing one end of a conveyor roller to a conveyor frame, wherein the support further includes a fastener to couple the support with the conveyor frame, wherein the fastener comprises nut, bolt and washer.

Various example embodiments described herein, relates to a support for securing one end of a conveyor roller to a conveyor frame, wherein the bushing includes a hole to receive the fastener.

Various example embodiments described herein, relates to a support for securing one end of a conveyor roller to a conveyor frame, wherein the securing plate includes a first partially open channel integrally cut-out at one end of the securing plate.

Various example embodiments described herein, relates to a support for securing one end of a conveyor roller to a conveyor frame, wherein the mounting plate comprises a supporting plate integrally molded at one end of the mounting plate, wherein the supporting plate includes a second partially open channel integrally cut-out at one end of the supporting plate.

Various example embodiments described herein, relates to a support for securing one end of a conveyor roller to a conveyor frame, wherein when the securing plate slides in the first direction, the first partially open channel moves towards the second partially open channel to sandwich the one end of the conveyor roller between the channels while tightening the fastener into the bushing.

Various example embodiments described herein, relates to a support for securing one end of a conveyor roller to a conveyor frame, wherein an extent of lateral movement of the securing plate in the first direction is based on an offset distance between the first aperture and the second aperture.

Various example embodiments described herein, relates to a support for securing one end of a conveyor roller to a conveyor frame, wherein the fastener is inserted through the bushing, the second aperture and an axle opening to couple the support with the conveyor frame.

Various example embodiments described herein, relates to a roller conveyor with a conveyor frame with a pair of opposite sidewalls defining plurality of axle openings and at least one roller positioned between the pair of opposite sidewalls. The roller includes a generally cylindrical roller surface that rotates relative to an axle. The roller conveyor further includes a support a support to secure the axle to at least one axle opening in the conveyor frame. The support includes a mounting plate with a first aperture, a securing plate with a second aperture, and a bushing. The first aperture is partially offset from the second aperture when the securing plate is coupled to the mounting plate. In response to the bushing being inserted through the first aperture and the second aperture, the bushing imparts a lateral force to move the securing plate and the mounting plate in opposite directions to secure the axle.

Various example embodiments described herein, relates to a roller conveyor with the support to secure the axle to at least one axle opening in the conveyor frame, wherein the securing plate slides laterally towards the one end of the conveyor roller to lock the axle against one end of the mounting plate.

Various example embodiments described herein, relates to a roller conveyor with the support to secure the axle to at least one axle opening in the conveyor frame, wherein the securing plate slides in a first direction and the mounting plate slides in a second direction opposite to the first direction to secure the axle.

Various example embodiments described herein, relates to a roller conveyor with the support to secure the axle to at least one axle opening in the conveyor frame, wherein the support further comprises a fastener to couple the support with the conveyor frame, wherein the fastener comprises nut, bolt and washer

Various example embodiments described herein, relates to a roller conveyor with the support to secure the axle to at least one axle opening in the conveyor frame, wherein the securing plate comprises a first partially open channel integrally cut-out at one end of the securing plate.

Various example embodiments described herein, relates to a roller conveyor with the support to secure the axle to at least one axle opening in the conveyor frame, wherein the mounting plate comprises a supporting plate integrally molded at one end of the mounting plate, wherein the supporting plate includes a second partially open channel integrally cut-out at one end of the supporting plate.

Various example embodiments described herein, relates to a roller conveyor with the support to secure the axle to at least one axle opening in the conveyor frame, wherein when the securing plate slides in the first direction, the first partially open channel moves towards the second partially open channel to sandwich the axle between the channels while tightening the fastener into the bushing.

Various example embodiments described herein, relates to a roller conveyor with the support to secure the axle to at least one axle opening in the conveyor frame, wherein an extent of axial movement of the securing plate in the first direction is based on offset distance between the first aperture and the second aperture.

Various example embodiments described herein, relates to a method of securing an axle of a conveyor roller to a sidewall of a conveyor frame. The method includes attaching a support to one end of an axle protruding from the sidewall of the conveyor frame. The support comprises a mounting plate, a securing plate and a bushing. The method further includes inserting the bushing into apertures provided on the mounting plate and the securing plate to impart a lateral force to the securing plate and the mounting plate. The apertures are partially offset from each other. Further, the method includes moving the mounting plate and the securing plate in opposite directions to secure the axle against one end of the mounting plate and fastening the support to the sidewall of the conveyor frame while inserting the bushing into the apertures.

Various example embodiments described herein, relates to a method of securing an axle of a conveyor roller to a sidewall of a conveyor frame. The method further includes sliding the securing plate in a lateral direction while fastening such that a second partially open channel of the securing plate is moved towards a first partially open channel of the mounting plate to secure the axle in position in between the first partially open channel and the second partially open channel.

The above summary is provided merely for purposes of summarizing some example embodiments to provide a basic understanding of some aspects of the disclosure. Accordingly, it will be appreciated that the above-described embodiments are merely examples and should not be construed to narrow the scope or spirit of the disclosure in any way. It will be appreciated that the scope of the disclosure encompasses many potential embodiments in addition to those here summarized, some of which will be further described below.

### BRIEF DESCRIPTION OF THE DRAWINGS

The description of the illustrative embodiments can be read in conjunction with the accompanying figures. It will be appreciated that for simplicity and clarity of illustration, elements illustrated in the figures have not necessarily been drawn to scale. For example, the dimensions of some of the elements are exaggerated relative to other elements. Embodiments incorporating teachings of the present disclosure are shown and described with respect to the figures presented herein, in which:
FIG. 1 illustrates a perspective view of a section of a conveyor having a support mounted at a sidewall of the conveyor in accordance with an embodiment of the present invention.
FIG. 2 illustrates an exploded perspective view of the support mounted at the sidewall of the conveyor in accordance with an embodiment of the present invention.
FIG. 3 illustrates a cross sectional side view of the support mounted at the sidewall of the conveyor depicting an offset in accordance with an embodiment of the present invention.
FIG. 4 illustrates a top view of the support mounted at the sidewall of the conveyor depicting the offset in accordance with an embodiment of the present invention.
FIG. 5 illustrates a partially cut away perspective view of the support mounted at the sidewall of the conveyor in accordance with an embodiment of the present invention.
FIG. 6 illustrates a flowchart depicting a method for operating the support of FIG. 1 at the sidewall of the conveyor to secure one end of the conveyor roller in accordance with an embodiment of the present invention.
FIG. 7 illustrates an exploded perspective view of another type of support mounted at the sidewall of the conveyor in accordance with another embodiment of the present invention.
FIG. 8 illustrates an exploded perspective view of another type of support mounted at the sidewall of the conveyor in accordance with another embodiment of the present invention.

### DETAILED DESCRIPTION

Some embodiments of the present invention will now be described more fully hereinafter with reference to the accompanying drawings, in which some, but not all embodiments of the inventions are shown. Indeed, the disclosure may be embodied in many different forms and should not be construed as limited to the embodiments set forth herein; rather, these embodiments are provided so that this disclosure will satisfy applicable legal requirements. The terms "or" and "optionally" are used herein in both the alternative and conjunctive sense, unless otherwise indicated. The terms "illustrative" and "exemplary" are used to be examples with no indication of quality level. Like numbers refer to like elements throughout.

The components illustrated in the figures represent components that may or may not be present in various embodiments of the invention described herein such that embodiments may include fewer or more components than those shown in the figures while not departing from the scope of the invention.

Turning now to the drawings, the detailed description set forth below in connection with the appended drawings is intended as a description of various configurations and is not intended to represent the only configurations in which the concepts described herein may be practiced. The detailed description includes specific details for the purpose of providing a thorough understanding of various concepts with like numerals denote like components throughout the several views. However, it will be apparent to those skilled in the art that these concepts may be practiced without these specific details.

As used herein, the terms "drive roller," "motorized roller", "MDR", "motorized drive roller" and similar terms may be used interchangeably to refer to a master roller which drives multiple slave rollers in accordance with embodiments of the present disclosure. The master roller may be driven by an internal drive or an external drive. Thus, use of any such terms should not be taken to limit the spirit and scope of embodiments of the present disclosure.

As used herein, the terms "axle portion", "axle" and similar terms may be used interchangeably to refer to a non-rotatable portion of a conveyor roller fixedly or non-rotatably connected to the conveyor frame in accordance with embodiments of the present disclosure. Thus, use of any such terms should not be taken to limit the spirit and scope of embodiments of the present disclosure.

As used herein, the terms "openings," "axle openings" and similar terms may be used interchangeably to refer to holes uniformly provided on opposite pair of sidewalls of the conveyor frame to position either the drive or driven rollers in between the pair of sidewalls in accordance with embodiments of the present disclosure. Thus, use of any such terms should not be taken to limit the spirit and scope of embodiments of the present disclosure.

In conveyor systems, a conveyor bed may be divided into multiple conveyor zones, and each conveyor zone may include a set of conveyor rollers. In some examples, a belt may be reeved around the set of conveyor rollers. Each conveyor roller in a conveyor zone is coupled directly to the conveyor frame. For example, the conveyor frame may include a pair of opposite sidewalls that support the set of conveyor rollers extending transversely between the sidewalls. These sidewalls include axle openings to receive axles of the set of conveyor rollers. The set of conveyor rollers may be rotated by an external motor or by a motorized drive roller. In some examples, the set of conveyor rollers may be driven by a drive belt positioned underneath the set of conveyor rollers. When the axles of the set of conveyor rollers are received in their respective axle openings, a rotation or movement of the axles may be substantially precluded by the axle openings. For example, a motorized drive roller typically includes an internal motor, a cylindrical portion and an axle. When the axle of the motorized drive roller is secured in the axle openings on the opposite sidewalls of the conveyor frame, actuation of the internal motor within the motorized drive roller causes the cylindrical portion of the motorized drive roller to rotate. A torque generated in the motorized conveyor roller due to this rotation and the axle of the motorized conveyor roller also experiences the same torque and tends to move or rotate within the openings. Such rotation or movement of the axle may be substantially arrested within the openings in the sidewalls that receives the axle. However, repeated impact due to relative movement of the axle inside the openings due to the generated torque may cause the edges of the axle or of the openings or both to become worn-out and deform over time, which leads to a looser fit of the axle within the openings. Such looser fit between the axle and its corresponding openings may lead to noises and/or vibrations of the conveyor bed when operational. In some examples, the motorized drive roller may be interconnected with other conveyor rollers in the conveyor zone using O-bands or O-rings to drive the other conveyor rollers. The looser fit between the axle of the motorized drive roller and its corresponding openings may result in the failure of the interconnection between the motorized drive roller and the other conveyor rollers causing a malfunction of the conveyor systems as the motorized drive roller may fail to drive the other rollers. This deficiency in the conveyor systems is more problematic if there are multiple conveyor zones as maintenance may be expensive and time-consuming.

Further, a conventional approach may be to use multiple clamps with multiple fasteners in a conveyor frame of the conveyor bed to provide additional support to the axle to arrest the movement of the axle within the openings, however, use of such multiple clamps and fasteners may increase an assembly and maintenance time of the conveyor systems and may pose difficulty in positioning or channeling out wirings of the motorized drive roller which often are fed through axle portion and/or the sidewalls of the conveyor frame for connection to the controls of the conveyor systems.

Through applied effort, ingenuity, and innovation, many of the above identified problems have been solved by developing solutions that are included in embodiments of the present disclosure, many examples of which are described in detail herein. The present disclosure relates to a support provided to lock the axle in openings provided on the sidewalls of the conveyor frame. The support includes a mounting plate, a securing plate, and a bushing. The mounting plate and the securing plate is provided with a first aperture and a second aperture respectively. The first aperture is partially offset from the second aperture and in response to the bushing being inserted through the first aperture and the second aperture, the bushing imparts a lateral force to move the securing plate and the mounting plate in opposite directions to lock the axle within the openings on the sidewalls.

According to an embodiment, the support further includes one fastener to couple the support with the conveyor frame. The fastener comprises nut, bolt and washer. The fastener is inserted through the bushing, the second aperture and an axle opening on the sidewall.

According to an embodiment, the securing plate slides in a first direction and the mounting plate slides in a second direction opposite to the first direction while inserting and tightening the fastener through the bushing.

In the following detailed description of exemplary embodiments of the disclosure, specific representative embodiments in which the disclosure may be practiced are described in sufficient detail to enable those skilled in the art to practice the disclosed embodiments. For example, specific details such as specific method orders, structures, elements, and connections have been presented herein. However, it is to be understood that the specific details presented need not be utilized to practice embodiments of the present disclosure. It is also to be understood that other embodiments may be utilized and that logical, architectural, programmatic, mechanical, electrical and other changes may be made without departing from the general scope of the disclosure. The following detailed description is, therefore, not to be taken in a limiting sense, and the scope of the present disclosure is defined by the appended claims and equivalents thereof.

Throughout this specification, the term 'conveyor' or 'conveyor system' may be used interchangeably and term 'conveyor' may be taken as an example of either a roller conveyor or a belt conveyor.

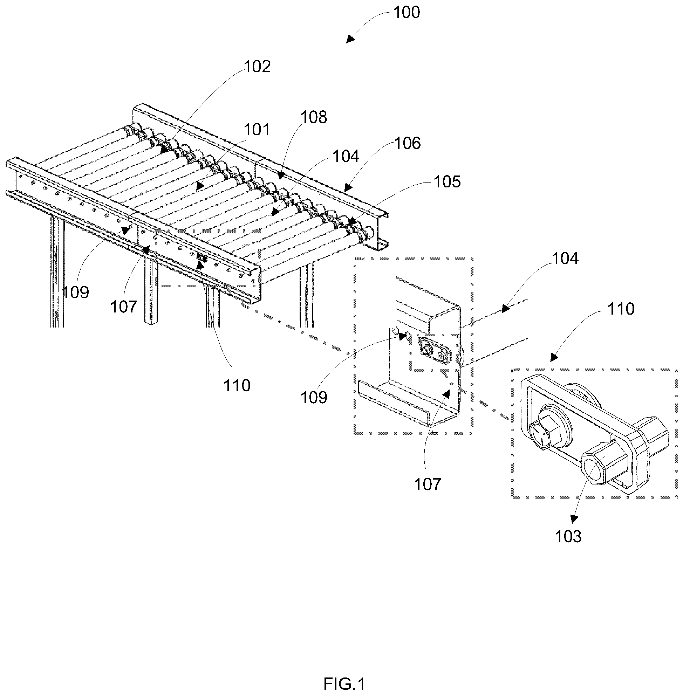

Referring now specifically to the drawings and the illustrative embodiments depicted therein, FIG. 1 illustrates a perspective view of a section of a conveyor having a support mounted at a sidewall of the conveyor in accordance with an embodiment of the present invention. A partial enlarged view of the support mounted to one of the rollers in the conveyor is also depicted in FIG.1. In the embodiment shown in FIG. 1, the section of the conveyor, for example, depicts one conveyor zone 100 of multiple conveyor zones of a roller conveyor. The conveyor zone 100 includes a plurality of rollers 101. The plurality of rollers 101 may be driven rollers 102 and drive rollers 104. The drive rollers 104 may be motorized rollers. For example, the conveyor zone 100 may include one motorized roller 104 which may be a master roller and other rollers (i.e.,) non-motorized rollers 102 driven by the motorized roller which may be slave rollers. In some examples, the drive/motorized rollers 104 may be positioned among the driven rollers 102 or at an end of a group of driven rollers 102. For example, the motorized rollers 104 may be of a type commercially available from various sources, such as a 12 Volt DC or 24 Volt DC motorized rollers or the like. In some examples, the plurality of rollers 101 may be operated by an external drive, for example, by a drive belt positioned underneath the rollers and capable of driving the rollers 101 when in contact with the rollers 101. Each of the drive roller 104 and driven roller 102 includes a generally cylindrical roller surface that rotates relative to an axle 103 of the drive roller 104 and the driven roller 102. The cylindrical roller surface being a rotatable portion of the rollers 101 and the axle 103 being a non-rotatable portion of the rollers 101. The driven rollers 102 may be interconnected to the drive rollers 104 by a plurality of drive members 105, such as flat or O-bands or belts or O-rings, such that rotation of the drive rollers 104 causes a corresponding rotation of the driven rollers 102, as is known in the conveyor art. As shown in FIG.1, the conveyor zone 100 includes a conveyor frame 106 with a pair of opposite sidewalls 107, 108 defining plurality of axle openings 109. The driven rollers 102 and the drive rollers 104 are positioned between the pair of opposite sidewalls 107, 108 perpendicular to direction of travel of the items on the conveyor zone 100. Each of the driven roller 102 and the drive roller 104 may be positioned into their associated axle openings 109 on the sidewalls 107, 108. For example, a first end of an axle 103 of any roller 101 may be positioned inside an axle opening 109 on one sidewall 107 and the second end of the axle 103 opposite to the first end may be positioned inside another axle opening 109 on another opposite sidewall 108. In this regard, each axle 103 may have two corresponding axle openings 109, each positioned in one sidewall of the pair of opposite sidewalls 107, 108.

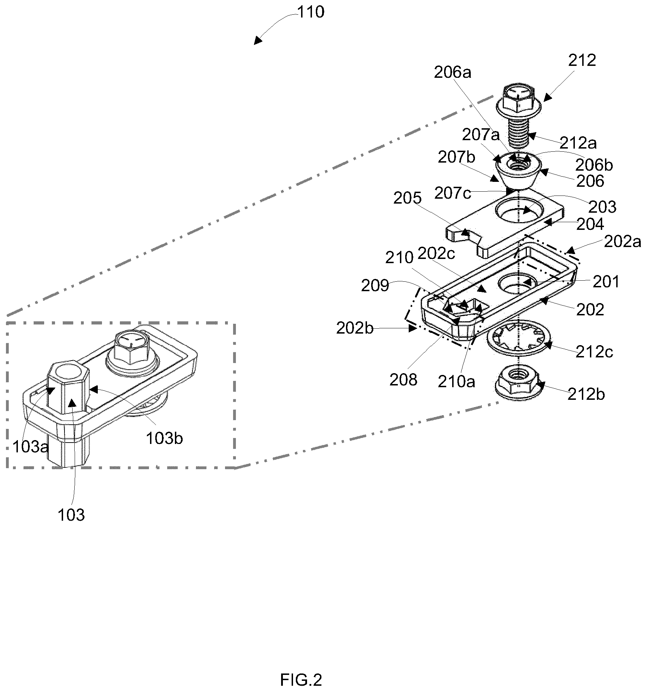

When the conveyor zone 100 is operational, the cylindrical roller surface of the drive roller 104 is rotated, which in turn rotates the cylindrical roller surface of the driven rollers 102 through the drive members 105. The rotation of the cylindrical roller surface creates a torque, which in turn creates a torsional motion in the axle 103 associated with the cylindrical roller surface. Such torsional motion may create vibrations/jerks in the rollers 101 and may cause damage to the axles 103 and associated axle openings 109 in the sidewalls 107, 108 resulting in noise and malfunction of the conveyor zone 100. In the embodiment, shown in FIG. 1, a support 110 is provided at one end of the axle 103 to secure the axle tightly inside the associated axle openings 109. As shown in the partial enlarged view of FIG. 1, the support 110 is positioned one of the sidewall 107 of the pair of sidewalls 107, 108 to secure one end of the axle 103 protruding out from the sidewall 107 of the conveyor frame 106. In some examples, the support 110 may be positioned on both the sidewalls 107, 108 to secure the first end and the second end of the axle 103. In some examples, the support 110 may be positioned on the sidewall 107 to secure either the axles 103 of the drive rollers 104 or the driven rollers 102 tightly inside the associated axle openings 109. In the embodiment shown in FIG.1, the support 110 is positioned on one of the sidewall 107 to receive the axle 103 of the drive/motorized roller 104. The protruding portion of the axle 103 is received by the support 110 to secure the axle 103 of the drive/motorized roller 104 tightly with the associated axle opening 109. The support 110 includes components which retain the axle 103 inside the axle opening 109, the components and their synergetic working will now be explained in detail in conjunction with FIG.2

FIG. 2 illustrates an exploded perspective view of the support 110 mounted at the sidewall 107 of a conveyor in accordance with an embodiment of the present invention. One end of a roller 104, and particularly as disclosed in the embodiment herein of the motorized roller 104 of the conveyor is received within the axle opening 109 and the support 110 mounted to the sidewall 107 of the conveyor, whereby the support 110 functions to clamp or otherwise tightly secure the one end of the roller 104 therewithin, as discussed below. The one end of the motorized roller 104 may be the portion of the axle 103 protruding out of the sidewall 107 of the conveyor frame 106.

As shown in FIG. 2, the support 110 includes a mounting plate 202 with a first aperture 201, a securing plate 204 with a second aperture 203, and a bushing 206. In an example, the first aperture 201 and the second aperture 203 may be conical apertures. In another example, the first aperture 201 and the second aperture 203 may be any type of non-circular apertures or circular apertures. The mounting plate 202 may include a first end portion 202a, a second end portion 202b and a base portion 202c. The first end portion 202a is opposite to the second end portion 202b. The base portion 202c connects the first end portion 202a and the second end portion 202b. The first end portion 202a, the second end portion 202b and the base portion 202c exists as a single molded piece to form the mounting plate 202. The first aperture 201 is formed on the base portion 202c and positioned adjacent to the first end portion 202a. A mounting hole 210 and a supporting plate 208 is positioned adjacent to the second end portion 202b. A mounting hole 210 is formed on the base portion 202c. The mounting hole 210 receives the one end of the roller 104 protruding out from the axle opening 109 on the sidewall 107. In some examples, the mounting hole 210 may be of same shape and dimension as of the axle opening 109. In some examples, the mounting hole 210 may be a partial opening with same dimension and shape of one half portion of the axle 103. In some examples, the mounting hole 210 may be any type of non-circular opening or circular opening into which the one end of the roller 104 is inserted. According to an embodiment, the mounting hole 210 may include an extension 210a. The extension 210a, for example, may be in the form a square or a rectangular slot extending out laterally from the mounting hole 210. Such extension 210a may be provided to easily channel out or insert the wirings of the roller 104 without causing any damage. According to an embodiment, when the mounting plate 202 is mounted on the sidewall 107, the mounting hole 210 and the axle opening 109 mate with each other to receive the one end of the roller 104. According to another embodiment, the mounting hole 210 is fit into the one end of the roller 104 protruding out from the axle opening 109 such that base portion 202c of the mounting plate 202 abuts with the sidewall 107. In some examples, the mounting plate 202 may be in the form of a U-shaped or C-shaped plate formed by the first end portion 202a, the second end portion 202b, and the base portion 202c fully housing the securing plate 204 and the supporting plate 208.

In some examples, the supporting plate 208 may be integrally molded at the second end portion 202b of the mounting plate 202 by welding the supporting plate 208 with the mounting plate 202. In some examples, the supporting plate 208 may be a separate component which is coupled to the second end portion 202b by an interference fit. The supporting plate 208 is positioned adjacent to the mounting hole 210. The supporting plate 208 appears to be a raised portion or a boss extending outward from the base portion 202c of the mounting plate 202. In some examples, the supporting plate 208 prevents the one end of the roller 104 from bending while clamping it within the mounting hole 210. The supporting plate 208 may include a partially open channel 209 integrally cut-out at one end of the supporting plate 208. In some examples, the partially open channel 209 may be a hexagonal shaped channel with shape and dimension same as that of one half of the axle 103. In some examples, the partially open channel 209 may have shape and dimension same as that of one half of the mounting hole 210. In some examples, the partially open channel 209, one half of the mounting hole 210 and one half of the axle 103 may be of same shape and dimension. In some examples, the partially open channel 209, one half of the mounting hole 210 and one half of the axle opening 109 may be of same shape and dimension. In some examples, the shape and dimension of the partially open channel 209 and one half of the mounting hole 210 may be dissimilar. According to an embodiment, when the mounting plate 202 is mounted on the conveyor frame 106, the one of the roller 104 protruding out from the sidewall 107 is received in the mounting hole 210 and the partially open channel 209. According to another embodiment, the mounting hole 210 is fit into the one end of the roller 104 protruding out from the axle opening 109 such that base portion 202c of the mounting plate 202 abuts with the sidewall 107 and the one end of the roller 104 abuts the partially open channel 209.

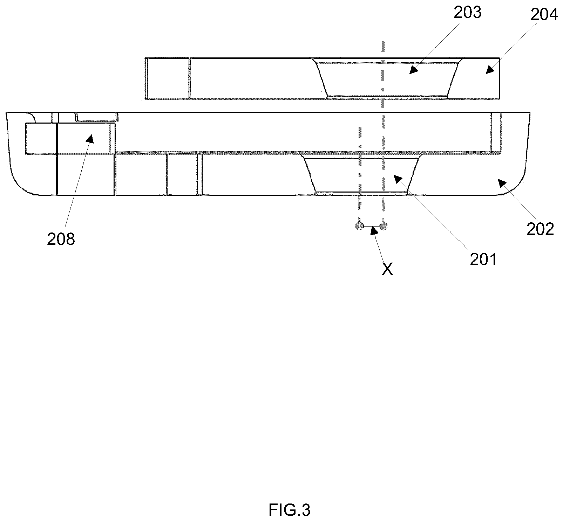

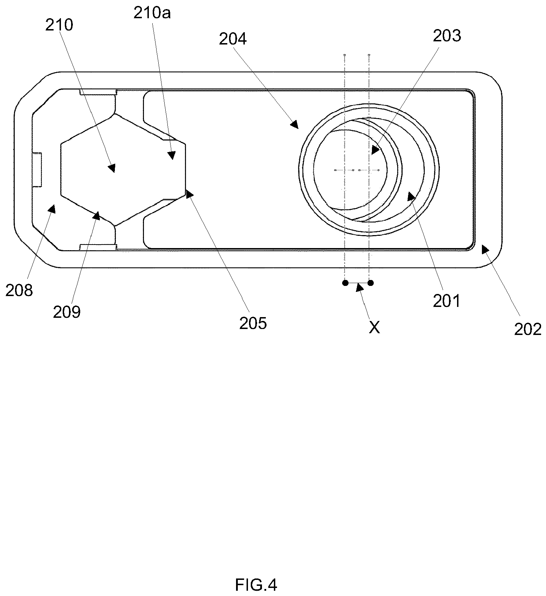

According to an embodiment, the securing plate 204 includes another partially open channel 205 integrally cut-out at one end of the securing plate. In some examples, the another partially open channel 205 may be a hexagonal shaped channel with shape and dimension same as that of one half of the axle 103. In some examples, the another partially open channel 205 may have shape and dimension same as that of one half of the mounting hole 210. In some examples, first partially open channel 209 of the supporting plate 208 and second partially open channel 205 of the securing plate 204 may be of same shape and dimension. For example, the first partially open channel 209 and the second partially open channel 205 are hexagonal shaped channels with same dimension. The securing plate 204 may be of smaller dimension than the mounting plate 202 such that the securing plate 204 is fully housed within the mounting plate 202. In some examples, a thickness of the supporting plate 208 and the securing plate 204 may be the same. According to an embodiment, the securing plate 204 is mounted on the mounting plate 202, for example, in between the first end portion 202a and the second end portion 202b of the mounting plate 202 abutting the base portion 202c of the mounting plate 202. According to an embodiment, the first aperture 201 of the mounting plate 202 and the second aperture 203 of the securing plate 204 are partially offset from each other. The offset between the apertures is depicted in FIG. 3 and FIG. 4. According to an embodiment, the mounting plate 202 may have lips (not shown) extending in X-axis inwardly from an outer periphery of the mounting plate 202 parallel to the base portion 202c to retain the securing plate 204 within the mounting plate 202. According to an embodiment, the securing plate 204 may be coupled with the mounting plate 202 using the bushing 206. The bushing 206 may be inserted into both the first aperture 201 and the second aperture 203 to couple the securing plate 204 with the mounting plate 202. According to another embodiment, the lips and the bushing 206 may couple the securing plate 204 with the mounting plate 202.

According to an embodiment, the bushing 206 includes a hole 206a with a threaded passageway 206b, formed at least partially therethrough, for threadedly receiving a fastener 212. For example, the threaded passageway 206b may be provided for ease of insertion and extraction of the bushing 206 into/from the first aperture 201 and the second aperture 203. In some example, the bushing 206 may include a through hole without the threaded passageway. In some examples, the fastener 212 may include a bolt 212a, nut 212b and washer 212c. In some examples, the fastener 212 may be threaded bolt or stud 212a which may be tightened through the threaded passageway 206b of the bushing 206 to engage a tail end of the threaded bolt 212a with a correspondingly threaded female fastener or nut 212b. In an example, the bushing 206 may be a conical bushing. In another example, the bushing 206 may be any type of non-circular bushing or circular bushing.

According to an embodiment, the securing plate 204 is coupled to the mounting plate 202 with a clearance such that the securing plate 204 is capable of a linear or lateral movement within the mounting plate 202 from a first end portion 202a of the mounting plate 202 to a second end portion 202b of the mounting plate 202. The lateral movement may be due to the partial offset between the first aperture 201 of the mounting plate 202 and the second aperture 203 of the securing plate 204. FIG. 3 illustrates a cross sectional side view and FIG. 4 illustrates a top view depicting this partial offset between the first aperture 201 and the second aperture 203 in accordance with an embodiment of the present invention. As shown in FIG. 3 and 4, the first aperture 201 of the mounting plate 202 and the second aperture 203 of the securing plate 204 are partially offset from each other. An example of an offset distance 'X' is indicated in FIG. 3 and FIG. 4. This offset distance 'X' may be the distance between a first line or normal drawn from the center of the first aperture 201 and a second line or normal drawn from the center of the second aperture 203. According to an embodiment, the extent of lateral movement of the securing plate 204 from the first end portion 202a towards the second end portion 202b is based on the offset distance between the first aperture 201 and the second aperture 203.

According to an embodiment, when the securing plate 204 and the mounting plate 202 are coupled, a portion of the first aperture 201 and a portion of the second aperture 203 do not fully overlap with each other due to the partial offset as shown in FIG. 4. Accordingly, when the bushing 206 is inserted through the overlapping portions of the first aperture 201 and the second aperture 203, a lateral force is created to laterally displace/move the securing plate 204 to align the first aperture 201 and the second aperture 203 such that both the apertures 201, 203 fully overlap when the bushing 206 is inserted. The lateral displacement/movement of the securing plate 208 occurs to compensate the offset distance and align the first aperture 201 and the second aperture 203 such that the bushing 206 may be inserted further through these apertures 201, 203. In other words, a misalignment due to the partial offset is corrected by the lateral displacement/movement such that bushing 206 may be fully inserted through these apertures. According to an embodiment, the first aperture 201 and the second aperture 203 may be conical apertures and the bushing 206 may be a conical bushing. A circumference of the conical bushing may be substantially equal to the circumference of the conical apertures.

According to an embodiment, in response to the bushing 206 being inserted through the first aperture 201 and the second aperture 203, the bushing 206 imparts the lateral force to move both the securing plate 204 and the mounting plate 202 in opposite directions. Accordingly, both the securing plate 204 and the mounting plate 202 are laterally displaced to compensate the offset distance and align the first aperture 201 and the second aperture 203 such that the bushing 206 may be inserted further through these apertures 201, 203. According to an embodiment, the lateral movement enables the securing plate 204 to move towards the second end portion 202b of the mounting plate 202 to clamp with the axle 103 and secure the axle 103 within the axle opening 109 and the mounting hole 210. For example, when the bushing 206 is inserted, the securing plate 204, positioned nearer to the first end portion 202a of the mounting plate 202, may slide in a first direction, due to the lateral force, from the first end portion 202a towards the second end portion 202b having the axle 103 seated within the mounting hole 210. At the same instant, the mounting plate 202 may also slide in a second direction, opposite to the first direction, as an effect of the lateral force imparted by the bushing 206. In this regard, due to relative lateral movement between the securing plate 204 and the mounting plate 202 caused by the lateral force, the first partially open channel 209 of the support 110 plate clamps with one face 103a of the axle 103 and the second partially open channel 205 of the securing plate 204 clamps with another face 103b of the axle 103, thereby sandwiching the axle 103 between the first partially open channel 209 and the second partially open channel 205 as shown in FIG.2. According to an embodiment, the first partially open channel 209 and the second partially open channel 205 may be hexagonally shaped channels and the axle 103 may be a hexagonally shaped axle. The hexagonally shaped axle may be locked in between the hexagonally shaped channel by clamping opposite faces of the hexagonally shaped axle.

According to an embodiment, the axle 103 is locked in between the partially open channels 209, 205 and within the mounting hole 210 and/or the axle opening 109 while the bushing 206 is inserted into the apertures 201, 203. The bushing 206 may be inserted further into the apertures 201, 203 by tightening the fastener 212 through the hole 206a of the bushing 206. For example, the lateral force created by the bushing 206 may be increased due to an effect of the fastener 212 being inserted or screwed into the threaded passageway 206b of the bushing 206. For example, a threaded portion of the fastener 212 may be inserted or screwed into the bushing 206 such that a tail portion 207c and a body portion 207b of the bushing 206 is inserted into the first aperture 201 and the second aperture 203 gradually during screwing or tightening motion of the fastener 212. The gradual insertion of the bushing 206 through the fastener 212 imparts an increase in lateral force to move the securing plate 204 and the mounting plate 202 such that the first partially open channel 209 and the second partially open channel 205 may impart an urging force against the axle 103 from opposite faces 103a, 103b of the axle 103, thereby locking/securing the axle 103 within the mounting hole 210 and/or the axle opening 109. In some examples, the fastener 212 may be tightened until only a head portion 207a of the bushing 206 is visible out of the securing plate 204 with head end of the fastener 212 abutting an outer periphery of the head portion 207a of the bushing 206 as shown in the partial enlarged view of FIG. 1.

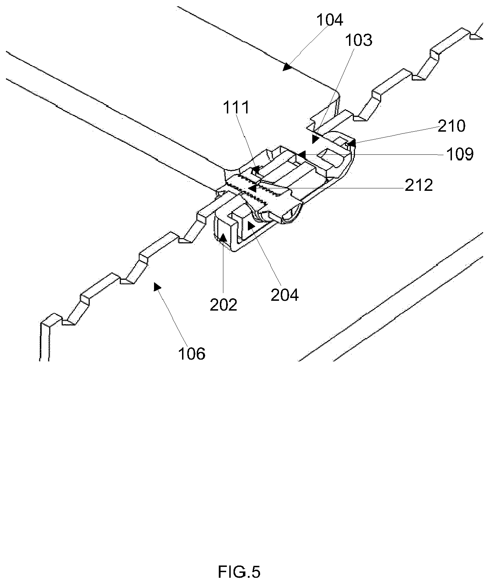

According to an embodiment, the fastener 212 secures the support 110 to the sidewall 107 of the conveyor frame 106 while imparting the lateral force to move the securing plate 204 and the mounting plate 202. For example, the tail end of the fastener 212, after being screwed into the bushing 206, is further inserted into the second aperture 203 and a second axle opening 111 on the sidewall 107 of the conveyor frame 106. FIG.5 shows illustrates a partially cut away perspective view of the support 110 mounted at the sidewall 107 in which the fastener 212 is inserted into the second axle opening 109 of the sidewall 107. As shown in FIG. 5, a first axle opening 109 is positioned to receive the one end of the axle 103 and the second axle opening 111 is positioned to receive the fastener 212. The first axle opening 109 mates with the mounting hole 210 as shown in FIG. 2 to receive the one end of the axle 103. In this regard, the one end of the axle 103 is inserted into the mounting hole 210 through the first axle opening 109. The second axle opening 111 positioned adjacent to the first axle opening 109 to receive the tail end of the fastener 212. In this regard, the fastener 212 is inserted into the second axle opening 111 to secure the support 110 to the sidewall 107 of the conveyor frame 106. According to an embodiment, the second axle opening 111 mates with the first aperture 201 of the mounting plate 202. In this regard, the fastener 212 is inserted into the second axle opening 111 through the bushing 206 and the first aperture 201 to mount the mounting plate 202 on the sidewall 107. As shown in FIG. 5, the tail end of the of the fastener 212 protruding out of the second axle opening 111 may be fastened with the sidewall 107, for example, using the nut 212b and the washer 212c as shown in FIG. 2. In this regard, while tightening/screwing the fastener 212 into the bushing 206, the axle 103 is locked due to lateral force imparted by the bushing 206 and the support 110 with the mounting plate 202 is simultaneously secured/locked with the sidewall 107 of the conveyor frame. Accordingly, the axle 103 is locked tightly within the mounting hole 210 and/or first axle opening 109 while the fastener 212 and the bushing 206 is inserted through the first aperture 201, the second aperture 203 and the second axle opening 109. Therefore, the mounting plate 202 and the securing plate 204 secures the axle 103 within the first axle opening 109 while fastening the support 110 to the second axle opening 111. In this regard, the mounting plate 202, the securing plate 204 and the bushing 206 restricts the movement of the axle 103 within the axle opening 109 of the conveyor frame 106 while fastening the support 110 on the conveyor frame 106.

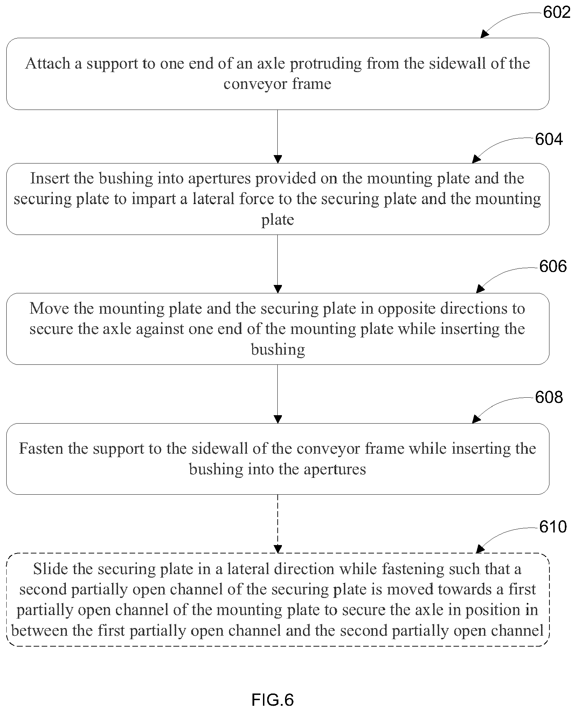

FIG. 6 illustrates a flowchart depicting a method for operating the support of FIG.1 at the sidewall of the conveyor to secure one end of the conveyor roller in accordance with an embodiment of the present invention. A support is provided for securing one end of the conveyor roller of a conveyor roller to the sidewall of a conveyor frame. The one end of the conveyor roller, for example, is a portion of the axle protruding out of the sidewall. The support includes a mounting plate, a securing plate, and a bushing. At step 602, the support is attached on the sidewall of the conveyor frame. The mounting plate includes a mounting hole and the sidewall includes a plurality of axle openings. In an embodiment, the mounting hole is positioned with one of the plurality of the axle openings on the sidewall such that the axle opening and the mounting hole overlap and one end of the axle of the conveyor roller is inserted through the overlapped axle opening and mounting hole. Further, the mounting plate includes a first partially open channel and a first aperture and the securing plate includes a second partially open channel and a second aperture. When the securing plate is coupled to the mounting plate the apertures are partially offset at a distance from each other. At step 604, the bushing is inserted into these partially offset apertures to impart a lateral force to the securing plate and the mounting plate to compensate for the offset and at step 606, the mounting plate and the securing plate move in opposite directions to secure the axle against one end of the mounting plate while inserting the bushing due to the lateral force is exerted on the mounting plate and the securing plate to compensate for the offset distance between the first aperture and the second aperture. An extent of the lateral movement of the mounting plate and the securing plate may be based on the offset distance between the first aperture and the second aperture. At step 608, a fastener is inserted through the bushing and the apertures to mount the support to the sidewall of the conveyor frame. According to an embodiment, one end of the fastener is received in a corresponding axle opening in the sidewall while tightening/screwing the fastener into the bushing. In this regard, the one end of the fastener is fastened to the corresponding axle opening to mount the support on the sidewall. According to an embodiment, the lateral movement of the mounting plate and the securing plate occurs while tightening/screwing the fastener into the bushing and the apertures. At step, 610, when the fastener is tightened/screwed into the corresponding axle opening in the sidewall, the bushing is inserted further into the apertures and the securing plate slides in the lateral direction such that the first partially open channel of the securing plate is moved towards the second partially open channel of the mounting plate to secure the axle in position in between the first partially open channel and the second partially open channel. According to an embodiment, the first partially open channel and the second partially open channel imparts an urging force to the axle inserted into the mounting hole and/or the axle opening because of the lateral movement of the mounting plate and the securing plate while tightening the fastener. In this regard, the axle is locked in its position within the axle opening of the sidewall restricting the torsional motion of the axle when the conveyor roller is actuated.

The various illustrative logical blocks, modules, circuits, and algorithm steps described in connection with the embodiments disclosed herein may be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention.

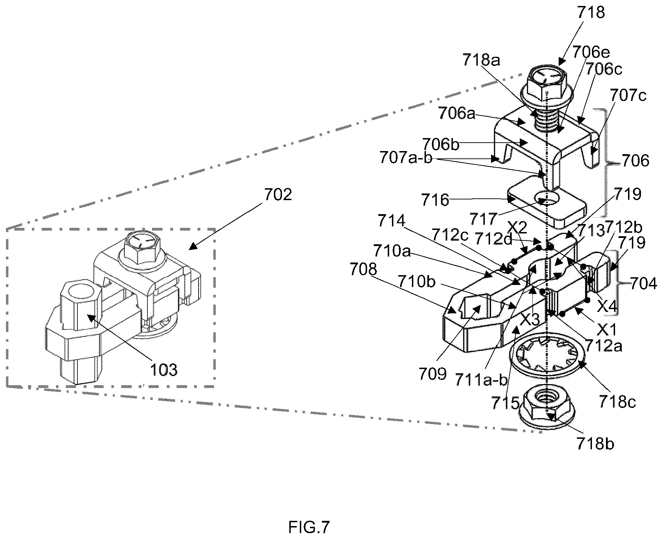

FIG. 7 illustrates an exploded perspective view of another type of support mounted at the sidewall of the conveyor in accordance with another embodiment of the present invention. As shown in FIG. 7, the support 702 includes a clipping part 704 and a clamping part 706. The clipping part 704 includes a first base portion 708 and two parallel extending arms 710a, 710b. The first base portion 708 includes a hexagonal slot 709 which receives an axle 103 of a conveyor roller. The first base portion 708 has a semi-hexagonal shape substantially same as that of one half of the hexagonal slot 709. The two parallel extending arms 710a, 710b extends from the hexagonal slot 709 and/or the first base portion 708. The first base portion 708 with the hexagonal slot 709 and the two parallel extending arms 710a, 710b exists as a single molded piece. Each of the two parallel extending arms 710a, 710b includes at least one guide slot 712a-d. In the embodiment depicted in FIG.7, each of the two parallel extending arms 710a, 710b includes two guide slots 712a-d formed integrally on each of the extending arms 710a, 710b. The two guide slots 712a-b on a first extending arm 710a is positioned parallel to the other two guide slots 712c-d on a second extending arm 710b. The two guide slots, for example, a first guide slot 712a and a second guide slot 712b formed on the first extending arm 710a are spaced apart from each other at a first distance 'X1'. The other two guide slots, for example, a third guide slot 712c and a fourth guide slot 712d formed on the second extending arm 710b are spaced apart from each other at a second distance 'X2'. The first distance 'X1' is proportional to the second distance 'X2'. In other words, all the guide slots 712a-d on the extending arms 710a, 710b are placed equidistantly from each other such that the first guide slot 712a is parallel and opposite to the third guide slot 712c and the second guide slot 712b is parallel and opposite to the fourth guide slot 712d. Further, the first guide slot 712a and the third guide slot 712c opposite to each other are separated by a distance 'X3' and similarly the second guide slot 712b and the fourth guide slot 712d opposite to each other are separated by a distance 'X4'. The distance 'X4' being less than the distance 'X3'. The guide slots 712a-d are formed integrally on an outer face 715 of the extending arms 710a, 710b. In some examples, the guide slots 712 a-d may be straight or tapered. According to an embodiment, the first extending arm 710a and the second extending arm 710b do not mate with each other forming a narrow longitudinal space/channel 714 between the first extending arm 710a and the second extending arm 710b. The narrow longitudinal space/channel 714 may extend from the hexagonal slot 709. For example, the hexagonal slot 709 may be a confined space/opening which receives one end of the axle 103 of the conveyor roller and the narrow longitudinal channel 714 may be the passageway which mates with the axle and moves over the axle 103 such that axle 103 is seated in the confined space. In other words, the narrow longitudinal channel 714 may extend from the confined space such that clipping part 704 may be inserted and/or removed into/from the axle 103 through the narrow longitudinal channel 714.

According to an embodiment, the clamping part 706 includes a stopper plate 716. The clamping part 706 has a second base portion 706a which includes at least a pair of extending legs 707a-d which extends from the second base portion 706a. In the embodiment shown in FIG. 7, the base portion includes two pair of extending legs 707a-d. The two pairs of extending legs 710a-d are identical and the FIG. 7 shows three extending legs 707a-c and 707d is not shown. The two pair of extending legs 707a-d are formed integrally on the second base portion 706a of the clamping part 706. A first pair of extending legs 707a-b extend from a first end portion 706b of the base portion 706a and a second pair of extending legs 707c-d extend from a second end portion 706c of the base portion 706a. In some examples, the extending legs 707 a-d may be straight or tapered. The first end portion 706b is opposite to the second end portion 706c. In some examples, the first end portion 706b and the second end portion 706c are arcuate portions. According to an embodiment, the first pair of extending legs 707a-b on the first end portion 706b, the second pair of extending legs 707c-d on the second end portion 706c, and the base portion 706a together exists as a single molded piece. According to an embodiment, the base portion 706a includes a first hole (not shown) which extends from an upper end 706e to a lower end (not shown) of the base portion 706a and the stopper plate 716 includes a second hole 717. The first hole (not shown) and the second hole 717 abut with each other when the stopper plate 716 is installed on the lower end (not shown) of the base portion 706a. The first hole and the second hole 717 together forms a through hole into which a fastener 718 may be inserted. In this regard, the fastener 718 may hold the base portion 706a of the clamping part 706 with the stopper plate 716 through the first hole and the second hole 717. A head end of the fastener 718 may be seated on the upper end 706e of the base portion 706a, a body and a tail end of the fastener 718 may be inserted or screwed through the first hole and the second hole 717. In some examples, the fastener 718 includes nut 718a, bolt 718b and washer 718c. According to an embodiment, each of the parallel extending arms 710a, 710b may include a partial arc shaped portion 711a-b integrally cut-out from an inner face 713 of each of the parallel extending arms 710a, 710b. The partial arc shaped portions 711a-b of the parallel extending arms 710a, 710b are positioned on the inner face 713 such that the partial arc shaped portions 711a-b are parallel and face each other. Such partial arc shaped portions 711a-b may be provided to form a passageway for the tail end of the bolt 718a to penetrate freely through the narrow longitudinal space/channel 714 of the parallel extending arms 710a, 710b such that the bolt 718a may mate with the corresponding nut 718b and washer 718c which are then fastened at a bottom part of the parallel extending arms 710a, 710b of the clipping part 704.

According to an embodiment, the support 702 may hold the axle 103 in position within the axle opening 109 on the conveyor frame 106 by coupling the clamping part 706 of the support 702 with the clipping part 704 of the support 702. As shown in FIG. 7, a portion of the axle 103 protruding from the axle opening 109 of the conveyor frame 106 is held in position using the support 702. The clipping part 704 which includes the two parallel extending arms 710a, 710b with the narrow longitudinal space/channel 714 therebetween is clipped on to the portion of the axle 103. For example, when the clipping part 704 is engaged over the portion of the axle 103, a mating end 719 on each of the extending arms 710a, 710b mates with the axle 103 and spreads wider to an extent to accommodate or sandwich the axle 103 in between the mating ends 719 such that the narrow longitudinal space/channel 714 of the clipping part 704 can be traversed over the axle 103 until the axle 103 is seated within the confined space of the hexagonal slot 709. In some examples, an audible clicking sound may be generated when the axle 103 is engaged or seated within the confined space of the hexagonal slot 709. When the clipping part 704 is engaged with the axle 106, the clamping part 706 in coupled to the axle 106 to hold the clipping part 704 in position such that the axle 106 within the confined space of the hexagonal slot 709 is secured in that position. For example, the two pair of extending legs 707a-d of the clamping part 706 is guided through the two pair of guide slots 712a-d on the extending arms 710a, 710b until a point at which the stopper plate 716 abuts a top part of the extending arms 710a, 710b. For example, the first pair of extending legs 707a-b on the first end portion 706b of the clamping part 706 is guided through the first guide slot 712a and the third guide slot 712c while the second pair of extending legs 707c-d on the second end portion 706c of the clamping part 706 is guided through the second guide slot 712b and the fourth guide slot 712d. The first pair of extending legs 707a-b and the second pair of extending legs 707c-d are guided until the stopper plate 716 on the lower end of the second base portion 706a abuts the parallel extending arms 710a, 710b. In some examples, the narrow longitudinal space/channel 714 between the parallel extending arms 710a, 710b is further narrowed when the clamping part 706 is coupled to the clipping part 704 through the extending legs 707a-d and the guide slots 712a-d. According to an embodiment, a tail end of the fastener 718, for example, a bolt 718a which extends from the second hole 717 of the stopper plate 716 is further screwed or tightened through the narrow longitudinal space/channel 714 to mate with corresponding nut 718b and washer 718c to further tighten the coupling between the clamping part 706 and the clipping part 704 such that the portion of the axle 103 is held within the hexagonal slot 709 of the clipping part 704 due to the tight coupling.

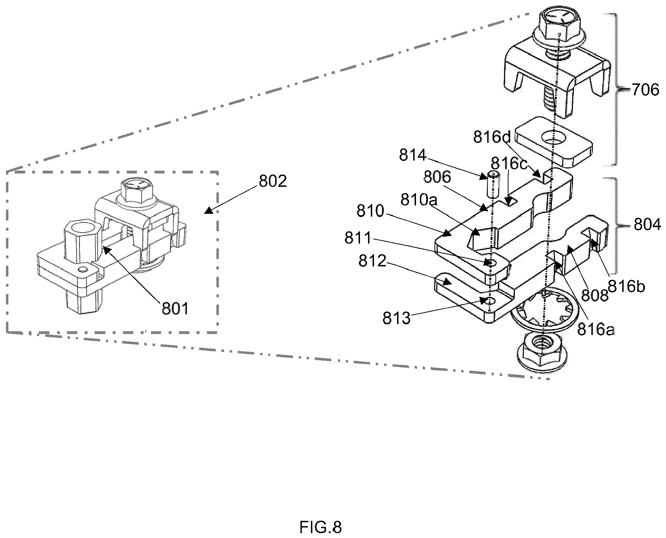

Similarly, in the embodiment as shown in FIG. 8 includes a support 802 with similar components as that of the support shown in FIG. 7. The clipping part 704 shown in FIG. 7 may be a single molded piece with the first base portion 708 and the parallel extending arms 710a, 710b, however, the clipping part 804 as shown in FIG. 8 is a two-piece structural component in which the two parallel extending arms 806, 808 are separate components, each having a corresponding base portion 810, 812. A first base portion 810 of a first extending arm 806 includes a first pin hole 811 which mates with a second pin hole 813 provided on a second base portion 812 of a second extending arm 808 when the first extending arm 806 and the second extending arm 808 are coupled. The first pin hole 811 and the second pin hole 813 overlap each other such that a pin 814, for example, a dowel pin, a hinge pin or pivot pin can be inserted through the overlapping pin holes 811. 813. Further, the hexagonal slot 709 formed integrally in the first base portion 708 with the extending arms 710a, 710b of FIG. 7 is split into two partial hexagonal slot 810a and 810b (not shown), each formed in corresponding base portion 810, 812 of FIG. 8. For example, a first partial hexagonal slot 810a is integrally cut out from the first base portion 810 and a second partial hexagonal slot 810b (not shown) is cut out from the second base portion 812. The first partial hexagonal slot 810a and the second partial hexagonal slot 810b (not shown) together forms a full hexagonal slot substantially same as that shown in FIG. 7 when the base portions 810, 812 are coupled with the pin holes 811, 813 and the pin 814. The pin holes 811, 813 and the pin 814 together may act as a pivotal joint. According to an embodiment, the first extending arm 806 and the second extending arm 808 can pivot relative to each other using the pivotal joint. Such pivotal movement is provided to accommodate axles 801 of varying dimensions when the clipping part clips over an end of the axle 801. In some examples, such pivotal movement may release the tension/stress induced in the parallel extending arms 806, 808 when clipping an oversized axle 801. As discussed previously in conjunction with FIG. 7, a tension/stress is induced initially in the parallel extending arms 710a, 710b when the mating ends 719 of the extending arms 710a, 710b spreads wide open to accommodate the axle 103 while guiding the axle into the hexagonal slot 709. Thereby, the spreading of the extending arms 710a, 710b and a pressing force of the axle 103 on the extending arms 710a, 710b when inserted in the narrow longitudinal channel 714 may contribute to the tension in the clipping part 704. In this regard, when the clipping part 704 is used with axle 801 which is larger in size than the axle 103 used in conjunction with FIG. 7, the tension on the parallel extending arms 710a, 710b may greatly increase contributing to the tension/stress on the clipping part 704. Accordingly, the pivotal movement of the extending arms 806, 808 provided by the support 802 shown in FIG. 8 may release this increased tension/stress initially experienced by the extending arms 710a, 710b when handling the oversized axle 801. Thereby, the extending arms 806, 808 may be separated to an extent by the pivotal movement to accommodate the oversized axle 801 within the hexagonal slot avoiding the increased tension which may be experienced when handling the axle 801 of a size larger than the axle 103 shown in the example embodiment of FIG. 7. Accordingly, the extending arms 806, 808 may be pivoted back with the axle 801 seated inside the hexagonal slot 810a, 810b and the clamping part 706 of FIG. 8 (identical to the clamping part of FIG.7) may clamp with the clipping part 804 (i.e., with the extending arms 806, 808) using the guide slots 816 a-d (identical to the guide slots of FIG.7) and the extending legs 707a-d as shown and explained in detail in conjunction with FIG. 7. Therefore, the support 702 and 802 of FIG. 7 and FIG. 8 respectively uses two varying clipping parts 704, 804 and an identical clamping part 706 to secure axles 103, 801 of varying sizes within the axle openings 109 on the conveyor frame 106. A person skilled in art may use the support disclosed in either FIG. 7 or FIG.8 based on the dimensions of the axle used in the conveyor frame. Therefore, the support as described in conjunction with FIG. 2, 7 and 8 may be used to secure the axle by restricting a movement of the axle within the axle openings when the conveyor roller is actuated.

The foregoing description of an embodiment has been presented for purposes of illustration and description. It is not intended to be exhaustive or to limit the invention to the precise form disclosed. Obvious modifications or variations are possible in light of the above teachings. The embodiment was chosen and described in order to best illustrate the principles of the invention and its practical application to thereby enable one of ordinary skill in the art to best utilize the invention in various embodiments and with various modifications as are suited to the particular use contemplated. Although only a limited number of embodiments of the invention are explained in detail, it is to be understood that the invention is not limited in its scope to the details of construction and arrangement of components set forth in the preceding description or illustrated in the drawings. The invention is capable of other embodiments and of being practiced or carried out in various ways. Also, in describing the embodiment, specific terminology was used for the sake of clarity. It is to be understood that each specific term includes all technical equivalents which operate in a similar manner to accomplish a similar purpose.

## Claims

1. A support for securing one end of a conveyor roller to a conveyor frame, wherein the support comprises:
a mounting plate with a first aperture;
a securing plate with a second aperture; wherein the first aperture is partially offset from the second aperture when the securing plate is coupled to the mounting plate; and
a bushing, wherein in response to the bushing being inserted through the first aperture and the second aperture, the bushing imparts a lateral force to move the securing plate and the mounting plate in opposite directions to secure the one end of the conveyor roller.

2. The support of claim 1, wherein the securing plate slides laterally towards the one end of the conveyor roller to lock the one end of the conveyor roller against one end of the mounting plate.

3. The support of claim 1, wherein the securing plate slides in a first direction and the mounting plate slides in a second direction opposite to the first direction to secure the one end of the conveyor.

4. The support of claim 1, further comprises a fastener to couple the support with the conveyor frame, wherein the fastener comprises nut, bolt and washer.

5. The support of claim 1, wherein the bushing includes a hole to receive the fastener.

6. The support of claim 1, wherein the securing plate comprises a second partially open channel integrally cut-out at one end of the securing plate.

7. The support of claim 1, wherein the mounting plate comprises a supporting plate integrally molded at one end of the mounting plate, wherein the supporting plate includes a first partially open channel integrally cut-out at one end of the supporting plate.

8. The support of claim 3, wherein when the securing plate slides in the first direction, the second partially open channel moves towards the first partially open channel to sandwich the one end of the conveyor roller between the channels while tightening the fastener into the bushing.

9. The support of claim 8, wherein an extent of lateral movement of the securing plate in the first direction is based on an offset distance between the first aperture and the second aperture.

10. The support of claim 1, wherein the fastener is inserted through the bushing, the second aperture and an axle opening to couple the support with the conveyor frame.

11. The support of claim 1, wherein the conveyor frame comprises a pair of opposite sidewalls defining a plurality of axle openings.

12. The support of claim 1, wherein the conveyor roller comprising a generally cylindrical roller surface that rotates relative to an axle.

13. A method of securing an axle of a conveyor roller to a sidewall of a conveyor frame, said method comprising:
attaching a support to one end of an axle protruding from the sidewall of the conveyor frame; wherein the support comprises a mounting plate, a securing plate and a bushing;
inserting the bushing into apertures provided on the mounting plate and the securing plate to impart a lateral force to the securing plate and the mounting plate, wherein the apertures are partially offset from each other; and
moving the mounting plate and the securing plate in opposite directions to secure the axle against one end of the mounting plate while inserting the bushing; and
fastening the support to the sidewall of the conveyor frame while inserting the bushing into the apertures.

14. The method of claim 13, wherein fastening the support further comprises:
sliding the securing plate in a lateral direction while fastening such that a second partially open channel of the securing plate is moved towards a first partially open channel of the mounting plate to secure the axle in position in between the first partially open channel and the second partially open channel.

15. The method of claim 13, wherein an extent of lateral movement of the securing plate in the first direction is based on an offset distance between the apertures.
